# EUROPEAN PATENT APPLICATION

(11) **EP 3 012 289 A1**
(43) Date of publication of application: **27.04.2016**
(21) Application number: 14813880.3
(22) Date of filing: 28.05.2014
(51) Int. Cl.: C08L 9/00, C08K 3/06, C08L 91/06, F16F 1/36, F16F 15/08

(54) **RUBBER COMPOSITION FOR VIBRATION-PROOF RUBBER**

(30) Priority: 21.06.2013 JP 2013130536
(71) Applicant: Toyo Tire & Rubber Co., Ltd., Osaka-shi, Osaka 550-8661 (JP)
(72) Inventor: FUNAHASHI,Hiroyasu, Osaka-shi Osaka 550-8661 (JP)
(74) Representative: Hart-Davis, Jason
(86) International application number: PCT/JP2014/064119
(87) International publication number: WO 2014/203695

(57) **Abstract**

A rubber composition for vibration-proof rubber, comprising 1 to 5 parts by weight of a paraffin wax for 100 parts by weight of rubber components;
the paraffin wax being a wax separated and purified from an oil distillated out by reduced-pressure distillation;
the rubber composition comprising, as the rubber components, 10 to 30 parts by weight of a polybutadiene rubber, and 70 to 90 parts by weight of a polyisoprene rubber; and the rubber composition comprising less than 1.0 part by weight of a sulfur-containing vulcanizer for 100 parts by weight of the rubber components.

## Description

### TECHNICAL FIELD

The present invention relates to a rubber composition, for vibration-proof rubber, that contains rubber components and a paraffin wax.

### BACKGROUND ART

While the power of automobiles has been made high in recent years, the quietness thereof has been required. Automobiles are used in various environments, and may thus be used in districts high in outdoor temperature, such as Southeast Asia and the Middle East, or may be used in cold districts. In general, automobiles provided with a vibration-proof rubber which contains natural rubber as a main component and is improved in heat resistance have no especial problem when used in districts high in outdoor temperature. However, in the case of allowing the automobiles to stand still in cold districts for a long period, abnormal vibration may be generated when their engine is restarted. A cause for this phenomenon would be that when the vibration-proof rubber is exposed to a very low temperature (for example, about -30°C), the rubber rises in dynamic spring constant to be remarkably lowered in original function thereof. Accordingly, considering the quietness, it is desired in the actual situation to develop a rubber composition for vibration-proof rubber about which a variation in the dynamic spring constant of the rubber is small.

As described above, as rubber components of a rubber composition for vibration-proof rubber, a rubber formulation made mainly of natural rubber has been generally used hitherto. As a technique for decreasing a variation in the dynamic spring constant of a vulcanized rubber from the rubber composition containing these rubber components, known is a technique of increasing the amount of a sulfur-containing vulcanizer in the rubber composition. However, this technique has a tendency that its vibration-proof rubber is deteriorated in heat resistance; thus, it is difficult to make the heat resistance compatible with a restraint of a change with time in the dynamic spring constant in a low-temperature range.

Patent Document 1 listed below describes a rubber support body having a rubber layer made by use of a rubber composition obtained by blending, into 100 parts by weight of a rubber material comprising natural rubber and/or a diene-based synthetic rubber, 1 to 5 parts by weight of one or more p-phenylenediamine based antiaging agents and an amount more than 2 parts by weight of one or more petroleum waxes. Furthermore, as the petroleum wax or one of the petroleum waxes, and the antiaging agent or one of the antiaging agents, the following are used, respectively, in the rubber support body: a n-paraffin having a melting point of 45 to 75°C in an amount more than 2 parts by weight for 100 parts by weight of the rubber material; and N-isopropyl-N'-phenyl-p-phenylenediamine in an amount of 0.5 to 3 parts by weight for 100 parts by weight of the rubber material.

Patent Document 2 listed below describes a rubber composition in which 1 to 10 parts by weight of a paraffin wax composition are blended into 100 parts by weight of a diene-based rubber.

### PRIOR ART DOCUMENTS

### PATENT DOCUMENTS

Patent Document 1: JP-A-11-315165
Patent Document 2: JP-A-04-202474

### SUMMARY OF THE INVENTION

### PROBLEMS TO BE SOLVED BY THE INVENTION

However, a theme of the rubber supporting body described in Patent Document 1 is merely the following: in the case of adopting a structure in which hard plates having rigidity and rubber layers are alternately laminated onto each other, an antiaging agent and a petroleum wax are blended in a specified amount into a composition for the rubber, thereby forming a protecting film by the blooming, or exudation of these components, in order to restrain the outer surface of the rubber from being cracked in a low-temperature environment also. Accordingly, the rubber supporting body described in Patent Document 1 has no theme of being restrained from being changed with time in dynamic spring constant in a very-low-temperature range.

A theme of the rubber composition described in Patent Document 2 is also merely to cause a wax to bloom into an appropriate degree from the rubber to prevent the rubber from being deteriorated by ozone in a wide temperature range. Accordingly, the rubber composition described in Patent Document 2 has no theme of being restrained from being changed with time in dynamic spring constant in a very-low-temperature range, either.

As far as the inventors know, there are no report examples about which research and development have been made to restrain a change with time in the dynamic spring constant of a vibration-proof rubber in a very-low-temperature range. An object of the present invention is to solve an unprecedented, or novel problem to provide a rubber composition for vibration-proof rubber that can be restrained from being changed with time in dynamic spring constant in a very-low-temperature range.

### MEANS FOR SOLVING THE PROBLEMS

The inventors have made eager investigations to solve the above-mentioned problems to find out that the object can be attained by a rubber composition described below for vibration-proof rubber. Thus, the present invention has been achieved.

Accordingly, the present invention is a rubber composition, for vibration-proof rubber, comprising 1 to 5 parts by weight of a paraffin wax for 100 parts by weight of rubber components; the paraffin wax being a wax separated and purified from an oil distillated out by reduced-pressure distillation; the rubber composition comprising, as the rubber components, 10 to 30 parts by weight of a polybutadiene rubber, and 70 to 90 parts by weight of a polyisoprene rubber; and the rubber composition comprising less than 1.0 part by weight of a sulfur-containing vulcanizer for 100 parts by weight of the rubber components.

In the rubber composition for vibration-proof rubber according to the present invention, its paraffin wax is a paraffin wax separated and purified from an oil distillated out by reduced-pressure distillation. By use of this paraffin wax, a rubber obtained after the composition is vulcanized can be restrained from being changed with time in dynamic spring constant in a very-low-temperature range, as will be demonstrated by experimental results that will be described later. Unclear are reasons why the use of the specified paraffin wax makes it possible to restrain the rubber after the vulcanization from being changed with time in dynamic spring constant in the very-low-temperature range. However, the reasons would be as follows:

About a vulcanized rubber containing a wax, in general, the wax is crystallized in a very-low-temperature range, whereby the rubber is abruptly heightened in hardness to be abruptly heightened also in dynamic spring constant. In the meantime, the rubber composition according to the present invention comprises, as its wax, a paraffin wax separated and purified from an oil distillated out by reduced-pressure distillation. Thus, in a rubber obtained after the composition is vulcanized, nuclei functioning as starting points for the crystallization can be decreased. As a result, the wax is restrained from being crystallized in the very-low-temperature range to decrease the rising degree of the rubber hardness. Consequently, a rise in the dynamic spring constant of the rubber can be restrained.

In the present invention, it is important to use the paraffin wax, which is separated and purified from an oil distillated out by reduced-pressure distillation. Furthermore, as rubber components in the invention, rubber components are used which contain 10 to 30 parts by weight of a polybutadiene rubber, and 70 to 90 parts by weight of a polyisoprene rubber; by the use, a change with time in the dynamic spring constant can be restrained at a higher level in the very-low-temperature range. Additionally, in order to improve the finally obtained vibration-proof rubber in heat resistance, it is important in the invention that a sulfur-containing vulcanizer is contained in an amount less than 1.0 part by weight for 100 parts by weight of the rubber components. If the content of the sulfur-containing vulcanizer is 1.0 part or more by weight for 100 parts by weight of the rubber components, the finally obtained vibration-proof rubber is deteriorated in heat resistance.

### MODE FOR CARRYING OUT THE INVENTION

In the rubber composition according to the present invention for vibration-proof rubber, a paraffin wax is contained in an amount of 1 to 5 parts by weight for 100 parts by weight of rubber components. This paraffin wax is a wax separated and purified from an oil distillated out by reduced-pressure distillation. For reference, any paraffin wax is clearly distinguishable from microcrystalline wax, which is separated and purified from any reduced-pressure distillation bottom or heavy distillated-out oil.

In the present invention, as the paraffin wax, which is separated and purified from an oil distillated out by reduced-pressure distillation, a commercially available product is also preferably usable. Examples thereof include Paraffin Wax 115, Paraffin Wax 120, Paraffin Wax 125, Paraffin Wax 130, Paraffin Wax 135, Paraffin Wax 140, Paraffin Wax 150, and Paraffin Wax 155 each manufactured by Nippon Seiro Co. , Ltd. It is preferred to use, out of these waxes, Paraffin Wax 130, Paraffin Wax 135, or Paraffin Wax 155 since the commercially available product produces a great advantageous effect of restraining a change with time in the dynamic spring constant in a very-low-temperature range.

In order to restrain, at a higher level, the change with time in the dynamic spring constant in the very-low-temperature range, it is preferred that the content of the paraffin wax is large for 100 parts by weight of the rubber components. However, if the content is too large, in a rubber product obtained after the rubber composition is vulcanized and formed, the wax suffers blooming so that the product may undergo an external appearance poorness. Accordingly, the content of the paraffin wax is preferably from 1 to 5 parts by weight, more preferably from 1 to 3 parts by weight for 100 parts by weight of the rubber components.

In the present invention, the following is used as the rubber components: a rubber formulation containing 10 to 30 parts by weight of a polybutadiene rubber, and 70 to 90 parts by weight of a polyisoprene rubber. As far as the rubber formulation in the invention contains the polybutadiene rubber and the polyisoprene rubber in respective amounts within this range, the rubber formulation may contain a natural rubber, and any other diene-based rubber, specific examples thereof including styrene butadiene rubber (SBR), butyl rubber (IIR), and acrylonitrile butadiene rubber (NBR). However, when the formulation contains the natural rubber, the rubber composition may become insufficient in advantageous effect of restraining a change with time in the dynamic spring constant in a very-low-temperature range. Accordingly, the content of the natural rubber is preferably 40 parts or less by weight, more preferably 20 parts or less by weight.

The rubber composition according to the present invention contains a sulfur-containing vulcanizer in addition to the rubber components and the paraffin wax. It is sufficient for a sulfur species as the sulfur-containing vulcanizer to be an ordinary sulfur species for rubber. The sulfur species maybe, for example, powdery sulfur, precipitated sulfur, insoluble sulfur, or highly dispersible sulfur. In the present invention, a vulcanization promoter capable of being decomposed to release active sulfur to contribute to a vulcanization reaction of rubber is also included in the category of the sulfur-containing vulcanizer. Examples of the vulcanization promoter include tetramethylthiuram disulfide, tetraethylthiuram disulfide, tetrabutylthiuram disulfide, tetraoctylthiuram disulfide, and 2-(4'-morpholinodithio)benzothiazole. The content of the sulfur-containing vulcanizer in the rubber composition for vibration-proof rubber according to the invention should be preferably made small to prevent the composition from being deteriorated in heat resistance. Specifically, the content needs to be less than 1. part by weight for 100 parts by weight of the rubber components. The content is more preferably less than 0. 6 part by weight, in particular preferably less than 0.3 part by weight therefor. If the content of the sulfur-containing vulcanizer is too small, it is feared that the vulcanized rubber is short in crosslinkage density to be lowered in rubber strength and others. Thus, the content of the sulfur-containing vulcanizer is preferably 0.1 part or more by weight for 100 parts by weight of the rubber components.

Together with the rubber components and the sulfur-containing vulcanizer, one or more blend agents used ordinarily in the rubber industry may be appropriately blended into the rubber composition of the present invention for vibration-proof rubber as far as the advantageous effects of the present invention are not damaged. Examples of the blend agent (s) include a vulcanization promoter, carbon black, silica, a silane coupling agent, zinc oxide, stearic acid, a vulcanization promoting aid, a vulcanization retarder, an antiaging agent, softeners such as wax and oil, and a processing aid.

The species of the carbon black may be, for example, SAF, ISAF, HAF, FEF, or GPF. The carbon black is usable as far as an adjustment can be made about one or more rubber properties, such as the hardness, reinforceability and low-exothermic property of a rubber obtained after the rubber composition is vulcanized. The blend amount of the carbon black is preferably from 10 to 80 parts by weight, more preferably from 15 to 75 parts by weight for 100 parts by weight of the rubber components. If this blend amount is less than 10 parts by weight, the reinforcing effect of the carbon black may not be sufficiently obtained. If the blend amount is more than 80 parts by weight, a deterioration may be produced in, for example, the exothermic property, the rubber blendability, and/or the workability of the composition at the time of a processing thereof.

The vulcanization promoter may be a vulcanization promoter usable ordinarily for rubber vulcanization. Examples thereof include sulfonamide type vulcanization promoters, thiuram type vulcanization promoters, thioazole type vulcanization promoters, thiourea type vulcanization promoters, guanidine type vulcanization promoters, and dithiocarbamate type vulcanization promoters. These may be used singly or in the form of an appropriate mixture.

The antiaging agent may be an antiaging agent usable ordinarily for rubber. Examples thereof include aromatic amine type antiaging agents, amine-ketone type antiaging agents, monophenol type antiaging agents, bisphenol type antiaging agents, polyphenol type antiaging agents, dithiocarbamate type antiaging agents, and thiourea type antiaging agents. These may be used singly or in the form of an appropriate mixture.

The rubber composition of the present invention for vibration-proof rubber can be obtained by using a mixer usable in an ordinary rubber industry, such as a Bunbury mixer, a kneader or a roll, to mix and knead the rubber components, the sulfur-containing vulcanizer, and the optional components, which are carbon black, silica, a silane coupling agent, zinc oxide, stearic acid, a vulcanization promoter, an antiaging agent, wax and/or others.

The method for blending the above-mentioned individual components with each other is not particularly limited. The method may be any one of the following: a method of kneading, in advance, blend components other than the sulfur-containing vulcanizer, the vulcanization promoter and any other vulcanization-related component to prepare a masterbatch, and then adding thereto the remaining components for further kneading; a method of adding the individual components in any order, and kneading the components; a method of adding all of the components simultaneously, and kneading the components; and other methods.

A vibration-proof rubber which can be restrained from being changed with time in dynamic spring constant in a very-low-temperature range can be produced by kneading the above-mentioned individual components, shaping the kneaded product, and vulcanizing the shaped product. This vibration-proof rubber is favorably usable as automobile vibration-proof rubbers for an engine mount, a torsional damper, a body mount, a cap mount, a member mount, a strut mount and a muffler mount; vibration-proof rubbers for railway trains, vibration-proof rubbers for industrial machines, seismic isolation rubbers for buildings, and vibration-proof and seismic isolation rubbers for, e.g., seismic isolation rubber supports. The vibration-proof rubber is useful, in particular, for an engine mount or any other heat-resistance-required constituent member of an automobile vibration-proof rubber.

### EXAMPLES

Hereinafter, working examples of the present invention will be more specifically described.

### Preparation of Rubber Compositions:

In accordance with a blending prescription in Table 1, a rubber composition of each of Examples 1 to 4 and Comparative Examples 1 to 4 was blended into 100 parts by weight of rubber components. An ordinary Bunbury mixer was used to knead the blended components to prepare a rubber composition. Each of the blend agents described in Table 1 is as follows:

a) Rubber components:
   Polyisoprene rubber: synthetic polyisoprene rubber ("IR 2200" manufactured by JSR Corp., "Mooney viscosity (ML₁₊₄ (100°C))" = 82, cis-1, 4 bond proportion = 98.5%, trans-1, 4 bond proportion = 1.5%, 3,4-vinyl bond proportion = 0%, and number-average molecular weight Mn = 300000)
   Polybutadiene rubber (BR) ("CB 22", manufactured by Lanxess Corp., "Mooney viscosity (ML₁₊₄ (100°C))" = 63, cis-1,4 bond proportion = 96%, and number-average molecular weight Mn = 250000)
b) Sulfur-containing vulcanizers:
   (A) 5% Oil processed sulfur
   (B) Sulfur-containing vulcanization promoter (thiuram type vulcanization promoter: tetramethylthiuram disulfide ("NOCCELER TT-P (TT)"), manufactured by Ouchi Shinko Chemical Industrial Co., Ltd.)
c) Carbon black: GPF ("SEAST V", manufactured by Tokai Carbon Co., Ltd.)
d) Zinc oxide: #3 Zinc flower
e) Stearic acid: stearic acid for industries
f) Antiaging agents:
   (A) Imidazole type antiaging agent: zinc salt of 2-mercaptobenzimidazole ("NOCRAC MBZ", manufactured by Ouchi Shinko Chemical Industrial Co., Ltd.)
   (B) Amine-ketone type antiaging agent: 2,2,4-trimethyl-1,2-dihydroquinoline polymer ("NOCRAC 224", manufactured by Ouchi Shinko Chemical Industrial Co., Ltd.)
   (C) Aromatic amine type antiaging agent: N-phenyl-N'-(1,3-dimethylbutyl)-p-phenylenediamine ("NOCRAC 6C", manufactured by Ouchi Shinko Chemical Industrial Co., Ltd.)
g) Vulcanization promoter (thiazole type vulcanization promoter: di-2-benzothiazolyl disulfide) ("NOCCELER DM-P (DM)", manufactured by Ouchi Shinko Chemical Industrial Co., Ltd.)
h) Crosslinking aid ("bismaleimide compound: N,N'-(4,4-diphenylmethane)bismaleimide" ("BMI-HS", manufactured by KI Chemical Industry Co., Ltd.))
i) Oil ("JOMO PROCESS NC-140", manufactured by Japan Energy Corp.)
j) Paraffin waxes (paraffin waxes each separated and purified from an oil distillated out by reduced-pressure distillation)
   (A) "PW-130", manufactured by Nippon Seiro Co., Ltd.
   (B) "PW-135", manufactured by Nippon Seiro Co., Ltd.
   (C) "PW-155", manufactured by Nippon Seiro Co., Ltd.
k) Microcrystalline waxes (waxes each separated and purified from a reduced-pressure distillation bottom or heavy distillated-out oil)
   (A) "OZOACE 2701" , manufactured by Nippon Seiro Co., Ltd.
   (B) "Hi-Mic-2045", manufactured by Nippon Seiro Co. , Ltd.
   (C) "BLUE MIC", manufactured by Nippon Seiro Co., Ltd.

### Evaluation:

A predetermined mold was used to heat and vulcanize each of the rubber compositions at 170°C for 20 minutes. The resultant sample rubbers were evaluated.

### <Dynamic spring constant and dynamic magnification>

In accordance with JIS-K 6385, one of the samples was measured about the dynamic spring constant and the static spring constant thereof. From the ratio between the former and the latter, the dynamic magnification was calculated out. It is demonstrated about the dynamic magnification that as the numerical value thereof is smaller, the vibration-proof performance is better.

### <Change with time in the dynamic spring constant in a very-low-temperature range (low-temperature property)>

A sample having a diameter of 50 mm and a height of 25 mm, out of the samples, was used, and the dynamic spring constant thereof was measured at an initial compression of 0.25 mm, an amplitude of 0.5 mm and a frequency of 100 Hz to cause the crystal thereof not to collapse. The dynamic spring constant at an initial stage at normal temperature, and that after 24 hours at -30°C were measured. From the change ratio between the former and the latter, the change with time was gained. As this change ratio is lower, it is meant that the change with time in the dynamic spring constant in a very-low-temperature range is smaller so that the sample is better. The results are shown in Table 1.

### <Blooming (external appearance property)>

One of the sample rubbers was allowed to stand still in a thermostat 40 degrees in temperature for 10 days, and then the outer surface thereof was visually observed. In this way, the external appearance property thereof was evaluated. After the standing, the sample rubber was taken out. When the outer surface of the rubber was not changed, the sample was judged to be good (○), or when the surface was whitened to be deteriorated in external appearance, the sample was judged to be bad (×). The results are shown in Table 1.

**[Table 1]**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Butadiene rubber | | 20 | 20 | 20 | 20 | 20 | 20 | 20 | 20 |
| Polyisoprene rubber | | 80 | 80 | 80 | 80 | 80 | 80 | 80 | 80 |
| Carbon black (GPF) | | 27 | 27 | 27 | 27 | 27 | 27 | 27 | 27 |
| Oil | | 5 | 5 | 5 | 5 | 5 | 5 | 5 | 5 |
| Zinc flower #3 | | 5 | 5 | 5 | 5 | 5 | 5 | 5 | 5 |
| Stearic acid | | 1 | 1 | 1 | 1 | 1 | 1 | 1 | 1 |
| Paraffin wax | (A)"PW-130" | 2 | - | - | - | - | - | - | - |
| | (B)"PW-135" | - | 2 | - | 5 | - | - | - | 7 |
| | (C)"PW-155" | - | - | 2 | - | - | - | - | - |
| Microcrystalline wax | (A)"OZOACE2701" | - | - | - | - | 2 | - | - | - |
| | (B)"Hi-Mic-2045" | - | - | - | - | - | 2 | - | - |
| | (C) BLUE MIC | - | - | - | - | - | - | 2 | |
| Antiaging agent A | | 2 | 2 | 2 | 2 | 2 | 2 | 2 | 2 |
| Antiaging agent B | | 2 | 2 | 2 | 2 | 2 | 2 | 2 | 2 |
| Antiaging agent C | | 2 | 2 | 2 | 2 | 2 | 2 | 2 | 2 |
| Sulfur | | 0.2 | 0.2 | 0.2 | 0.2 | 0.2 | 0.2 | 0.2 | 0.2 |
| Sulfur-containing vulcanization promoter "NOCCELER TT-P (TT)" | | 0.6 | 0.6 | 0.6 | 0.6 | 0.6 | 0.6 | 0.6 | 0.6 |
| Vulcanization promoter "NOCCELER DM-P (DM)" | | 2 | 2 | 2 | 2 | 2 | 2 | 2 | 2 |
| Crosslinking aid A | | 1.5 | 1.5 | 1.5 | 1.5 | 1.5 | 1.5 | 1.5 | 1.5 |
| Dynamic spring constant change magnification after 240 hours at -30°C | | 8.8 magnifications | 8.7 magnifications | 8.5 5 magnifications | 8.9 magnifications | 20 magnifications | 28 magnifications | 29 magnifications | 8.9 magnifications |
| Low-temperature property (at -30°C for 240 hours) | | ○ | ○ | ○ | ○ | × | × | × | ○ |
| Blooming (external appearance property) | | ○ | ○ | ○ | ○ | ○ | ○ | ○ | × |

From the results in Table 1, it is understood that about the vulcanized rubbers according to Examples 1 to 4, the respective changes with time in the dynamic spring constant in the very-low-temperature range were sufficiently restrained, as compared with those about the vulcanized rubbers according to Comparative Examples 1 to 3. About the vulcanized rubber according to Comparative Example 4, the change with time in the dynamic spring constant in the very-low-temperature range was sufficiently restrained. However, blooming was generated. It is therefore understood that when the external appearance property of such a vulcanized rubber is considered, the upper limit of the blend amount of its paraffin wax is preferably 5 parts by weight for 100 parts by weight of its rubber components.

## Claims

1. A rubber composition for vibration-proof rubber, comprising 1 to 5 parts by weight of a paraffin wax for 100 parts by weight of rubber components;
the paraffin wax being a wax separated and purified from an oil distillated out by reduced-pressure distillation;
the rubber composition comprising, as the rubber components, 10 to 30 parts by weight of a polybutadiene rubber, and 70 to 90 parts by weight of a polyisoprene rubber; and the rubber composition comprising less than 1.0 part by weight of a sulfur-containing vulcanizer for 100 parts by weight of the rubber components.
